(19) Europäisches Patentamt
European Patent Office
Office européen des brevets

(11) **EP 2 380 926 B1**

(12) **EUROPEAN PATENT SPECIFICATION**

(45) Date of publication and mention
of the grant of the patent:
**21.06.2017 Bulletin 2017/25**

(51) Int Cl.:
***C08K 5/00*** *(2006.01)*   ***C08J 3/22*** *(2006.01)*
***C08L 23/10*** *(2006.01)*

(21) Application number: **10161000.4**

(22) Date of filing: **26.04.2010**

(54) **Masterbatch for improving stiffness and transparency of a random propylene copolymer**

Vormischung zur Verbesserung der Steifheit und Transparenz eines zufälligen Propylencopolymers

Mélange maître pour améliorer la rigidité et la transparence d'un copolymère de propylène aléatoire

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**26.10.2011 Bulletin 2011/43**

(73) Proprietor: **Borealis AG**
**1220 Vienna (AT)**

(72) Inventors:
• **Friel, David**
**Copenhagen V, 1668 (DK)**
• **Doshev, Petar**
**4040 Linz (AT)**
• **Obadal, Martin**
**76601 Valasske Klobouky (CZ)**

• **Kheirandisch, Saeid**
**41468 Neuss (DE)**
• **Tynys, Antti**
**4020, Linz (AT)**

(74) Representative: **Maiwald Patentanwalts GmbH**
**Elisenhof**
**Elisenstrasse 3**
**80335 München (DE)**

(56) References cited:
**WO-A1-2004/046434      WO-A1-2005/047383**
**WO-A1-2006/018777      WO-A1-2007/068766**
**WO-A1-2010/049370      WO-A1-2010/049371**
**US-A1- 2003 054 161**

**Description**

The present invention is directed to a masterbatch for improving stiffness and transparency of a random propylene copolymer, as well as to a new polypropylene composition obtained by the masterbatch.

It is well known in the polymer field to tailor polymer properties by using masterbatches including additives in concentrated amounts. Accordingly a common approach to dose powder additives like colorants, pigments, processing aids, slip agents, nucleating agents, etc. into a polymer is to use a masterbatch consisting of a base material (polymer, wax or viscous liquids) carrying the desired additives. In general, miscibility between the base material of the masterbatch and the polymer improves dispersion of the additive within the polymer during processing. Nevertheless industrially this is not frequently satisfied, e.g. quite often a polyethylene based masterbatch is used for polypropylene additivation. Apparently, decreasing the molecular weight of the base masterbatch material can support better distribution of the additive. A further method to dose a powder additive is to use a dry blend (mixture between the polymeric material in the form of powder or pellets) which is then homogenized using a compounder or directly by extruder.

Even though the concept of masterbatch is known, there is still the need to reduce costs (mostly driven by the additives) without losing the desired properties obtained by the employed additives.

Thus it is the object of the present invention to provide an economic way to improve stiffness without losing transparency of a random propylene copolymer, in particular to provide an economic way to improve stiffness without losing transparency of an injection molded article or of an injection stretch blow molded article (ISBM) based on a random propylene copolymer.

The finding of the present invention is to use a masterbatch (M) of a polypropylene (PP1) and an $\alpha$-nucleating agent (N) for improving transparency and stiffness in a random propylene copolymer (R-PP), wherein the melt flow rate $MFR_2$ (230 °C) of the polypropylene (PP1) must clearly differ from the melt flow rate $MFR_2$ (230 °C) of the random propylene copolymer (R-PP).

Accordingly the present invention is directed to the use of a masterbatch (M) for improving transparency and stiffness in a random propylene copolymer (R-PP), wherein

(a) the masterbatch (M) comprises a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,
(b) the random propylene copolymer (R-PP) has a comonomer content in the range of above 0.5 to 10.0 wt.-%, the comonomers are ethylene and/or at least one $C_4$ to $C_{12}$ $\alpha$-olefin,
(c) the polypropylene (PP1) has a melt flow rate $MFR_2$ (230°C) measured according to ISO 1133 of at least 500.0 g/10 min,
(d) the polypropylene (PP1) and the random propylene copolymer (R-PP) fulfill the relation (1), preferably relation (1a), yet more preferably relation (1b)

$$0.4 \text{ x MFR (R-PP)} \leq \text{MFR (PP1)} \leq 500 \text{ x MFR (R-PP)} \quad (1)$$

$$0.5 \text{ x MFR (R-PP)} \leq \text{MFR (PP1)} \leq 400 \text{ x MFR (R-PP)} \quad (1a)$$

$$0.55 \text{ x MFR (R-PP)} \leq \text{MFR (PP1)} \leq 300 \text{ x MFR (R-PP)} \quad (1b)$$

wherein

MFR (R-PP) is melt flow rate $MFR_2$ (230 °C) [g/10min] measured according to ISO 1133 of the random propylene copolymer (R-PP) without the masterbatch (M), and MFR (PP1) is melt flow rate $MFR_2$ (230 °C) [g/10min] measured according to ISO 1133 of the polypropylene (PP1).

Preferably the weight ratio of masterbatch (M) to random propylene copolymer (R-PP) [M/R-PP] is from 0.5/99.5 to 15.0/85.0, more preferably from 1.0/99.0 to 12.0/88.0, yet more preferably from 2.0/98.0 to 10.0/90.0.

The term masterbatch (M) according to this invention is understood as known in the art. Accordingly the term masterbatch (M) indicates that the amount of the $\alpha$-nucleating agent (N) in the masterbatch (M) is higher compared to the amount of the $\alpha$-nucleating agent (N) in the end composition. Therefore in a preferred embodiment the weight ratio

of $\alpha$-nucleating agent (N) to polypropylene (PP1) [N/PP1] in the masterbatch (M) is from 1.0/99.0 to 25.0/75.0, more preferably from 1.5/98.5 to 20.0/80.0, yet more preferably from 2.0/98.0 to 15.0/85.0.

Opposed to dry blends the masterbatch (M) according to this invention is preferably featured by the fact that the $\alpha$-nucleating agent (N) particles are dissolved in the melt of the polypropylene (PP1) during melt-mixing and will recrystallize from said melt upon solidification. In other words the polypropylene (PP1) and the $\alpha$-nucleating agent (N) particles do not form a mixture of separate particles (dry blends) but a microscale dispersion of recrystallized fibrils of the nucleating agent, said fibrils having a diameter of less than 0.25 $\mu$m, preferably less than 0.1 $\mu$m, measured according by transmission electron microscopy (TEM) or scanning (atomic) force microscopy (AFM). Examples for such determinations can be found in the literature, e.g. by Shepard et al., J.Polym. Sci.B: Polym.Phys. 35, p. 2617-2628 (1997) and by Lipp et al., Langmuir, 22, p. 6398-640 (2006).

The polypropylene (PP1) of the masterbatch (M) can be a random propylene copolymer (R-PP1) or a propylene homopolymer (H-PP1), the latter being preferred.

The term random is understood according to IUPAC (Glossary of basic terms in polymer science; IUPAC recommendations 1996). Accordingly it is preferred that the random propylene copolymer (R-PP1) has a randomness of at least 40 %, more preferably of at least 50 %, yet more preferably at least 55 %, even more preferably of at least 60 %, and still more preferably of at least 65 %.

In case the polypropylene (PP1) is a random propylene copolymer (R-PP1) it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the random propylene copolymer (R-PP1) comprises, especially consist of, monomers copolymerizable with propylene from the group consisting of ethylene, 1-butene and 1-hexene. More specifically the random propylene copolymer (R-PP1) comprises - apart from propylene - units derivable from ethylene and/or 1-butene. In a preferred embodiment the random propylene copolymer (R-PP1) comprises units derivable from ethylene and propylene only. The comonomer content in the random propylene copolymer (R-PP1) is preferably relatively low, i.e. from 0.5 to 10.0 wt.-%, more preferably 0.5 to 8.0 wt.-%, yet more preferably 0.7 to 8.0 wt.-%.

The expression propylene homopolymer (H-PP1) used in the instant invention relates to a polypropylene that consists substantially, i.e. of at least 99.5 wt.-%, more preferably of at least 99.8 wt.-%, of propylene units. In a preferred embodiment only propylene units in the propylene homopolymer (H-PP1) are detectable. The comonomer content can be determined with FT infrared spectroscopy, as described below in the examples.

As stated above it is in particular appreciated that the polypropylene (PP1) is a propylene homopolymer (H-PP1).

Preferably the polypropylene (PP1) is isotactic. Accordingly it is appreciated that the polypropylene has a rather high isotactic triad concentration, i.e. higher than 90 %, more preferably higher than 92 %, still more preferably higher than 93 % and yet more preferably higher than 95 %, like higher than 97 %.

As indicated in the present invention, the masterbatch (M) is used for additivation of random propylene copolymers (R-PP) which are mainly used in the manufacture of injection moulded (IM), extrusion blow molded (EBM) or injection stretch blow molded (ISBM) articles. Accordingly the melt flow rate of the random propylene copolymers (R-PP) is moderate, like in the range of 1.8 to 40.0 g/10min, preferably 2.0 to 35.0 g/10min. The melt flow rate $MFR_2$ (230 °C) of the polypropylene (PP1) can be lower than the melt flow rate $MFR_2$ (230 °C) of the random propylene copolymers (R-PP) or higher, even significantly higher. In a preferred embodiment the melt flow rate $MFR_2$ (230 °C) of the polypropylene (PP1) is higher than the melt flow rate $MFR_2$ (230 °C) of the random propylene copolymers (R-PP).

The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$ (230 °C). Accordingly, it is preferred that the polypropylene (PP1) has a melt flow rate $MFR_2$ (230 °C) measured according to ISO 1133 below 20,000.0 g/10min, more preferably below 10,000.0 g/10min. The polypropylene (PP1) has a melt flow rate $MFR_2$ (230 °C) measured according to ISO 1133 of at least 500.0 g/10min, preferably in the range of 500.0 to 5,000.0 g/10min, like 600.0 to 2,500.0 g/10min.

Accordingly it is preferred that the polypropylene (PP1)has a weight average molecular weight (Mw) in the range of 40 to 900 kg/mol, more preferably in the range of 50 to 750 kg/mol.

Further the polypropylene (PP1) is defined by the melting behaviour. Accordingly it is appreciated that the polypropylene (PP1) has a melting temperature ($T_m$) measured by differential scanning calorimetry (DSC) of at least 130 °C, more preferably of at least 135 °C, yet more preferably of at least 140 °C. Thus it is in particular appreciated that the melting temperature ($T_m$) measured by differential scanning calorimetry (DSC) of the polypropylene (PP1) is in the range of 130 to 170 °C, more preferably in the range of 135 to 167 °C.

The polypropylene (PP1) can have a xylene cold soluble content (XCS) in a broad range, i.e. up to 12.0 wt.-%. Accordingly the polypropylene (PP1) may have a xylene cold soluble content (XCS) measured according to ISO 6427 in the range of 0.5 to 12.0 wt.-%, like 0.7 to 9.0 wt.-%.

The amount of xylene cold soluble (XCS) additionally indicates that the polypropylene (PP1) is preferably free of any elastomeric polymer component, like an ethylene propylene rubber. In other words polypropylene (PP1) shall be not a heterophasic polypropylene, i.e. a system consisting of a polypropylene matrix in which an elastomeric phase is dispersed. Such systems are featured by a rather high xylene cold soluble content.

Accordingly the masterbatch (M) comprises only the polypropylene (PP1) and additives, in particular the $\alpha$-nucleating agent (N). In one specific embodiment the masterbatch (M) consists of the polypropylene (PP1) and the $\alpha$-nucleating agent (N).

The masterbatch (M) is further specified by the $\alpha$-nucleating agent (N). As stated above, preferred $\alpha$-nucleating agent (N) are those which are soluble in the polypropylene (PP1), like the propylene homopolymer (H-PP1). Soluble $\alpha$-nucleating agents are characterized by demonstrating a sequence of dissolution in heating and recrystallization in cooling to improve the degree of dispersion. Methods for determining said dissolution and recrystallization are described for example by Kristiansen et al. in Macromolecules 38 (2005) pages 10461-10465 and by Balzano et al. in Macromolecules 41 (2008) pages 5350-5355. In detail, the dissolution and recrystallization can be monitored by means of melt rheology in dynamic mode as defined by ISO 6271-10:1999.

Accordingly it is preferred that the $\alpha$-nucleating agents are selected from the group consisting of sorbitol derivatives, nonitol derivatives, benzene-trisamides, and mixtures thereof. Suitable sorbitol derivatives are di(alkylbenzylidene)sorbitols, like 1,3:2,4-dibenzylidenesorbitol or bis-(3,4-dimethylbenzylidene)sorbitol. Suitable nonitol derivatives include 1,2,3-trideoxy-4,6:5,7-bis-O-[(4-propylphenyl)methylene]-nonitol, while suitable benzene-trisamides include substituted 1,3,5-benzenetrisamides, like N,N',N''-tris-tert-butyl-1,3,5-benzenetricarboxamide or N,N',N''-tris-cyclohexyl-1,3,5-benzene-tricarboxamide. Especially preferred are di(alkylbenzylidene)sorbitols, like 1,3:2,4-dibenzylidenesorbitol or bis-(3,4-dimethylbenzylidene)sorbitol or nonitol derivatives, like 1,2,3-trideoxy-4,6:5,7-bis-O-[(4-propylphenyl)methylene]-nonitol.

Keeping the above information in mind, the masterbatch (M) comprises a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin, preferably the polypropylene (PP1) is a propylene homopolymer (H-PP1),

wherein further

   (a) the weight ratio of the $\alpha$-nucleating agent (N) to the polypropylene (PP1) [N/PP1] in the masterbatch (M) is from 1.0/99.0 to 25.0/75.0, preferably from 1.5/98.5 to 20.0/80.0, more preferably from 2.0/98.0 to 15.0/85.0, and
   (b) said polypropylene (PP1) has a melt flow rate $MFR_2$ (230 °C) measured according to ISO of at least 500.0 g/10min, preferably in the range of 500.0 to 5000.0 g/10min, more preferably in the range of 600.0 to 2500.0 g/10min.

Additionally it is appreciated that the masterbatch (M) as defined herein has a rather high crystallization temperature ($T_c$). Thus it is preferred that the masterbatch (M) has a crystallization temperature ($T_c$) measured by differential scanning calorimetry (DSC) of at least 108 °C, more preferably of at least 112 °C. Accordingly the masterbatch (M) has preferably a crystallization temperature ($T_c$) measured by differential scanning calorimetry (DSC) in the range of 108 to 135 °C, more preferably in the range of 115 to 130 °C

The above defined masterbatch (M) is preferably used in a random propylene copolymer (R-PP).

Thus in the following the properties of the random propylene copolymer (R-PP), i.e. without the masterbatch (M), are defined in more detail.

Further the random propylene copolymer (R-PP) shall be preferably used for the manufacture of injection molded (IM) article, extrusion blow molded (EBM) articles or injection stretch blow molded (ISBM) articles. Accordingly it is preferred that the random propylene copolymer (R-PP) has a melt flow rate $MFR_2$ (230 °C) measured according to ISO 1133 in the range of 1.8 to 150.0 g/10min, more preferably in the range of 2.0 to 100.0 g/10min, yet more preferably in the range of 10.0 to 80.0 g/10min, still yet more preferably in the range of 12.0 to 60.0 g/10min, like in the range of 12.0 to 20.0 g/10min.

Accordingly it is preferred that the random propylene (R-PP) has weight average molecular weight (Mw) in the range of 100 to 600 kg/mol, more preferably in the range of 150 to 580 kg/mol.

The random propylene copolymer (R-PP) comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the random propylene copolymer (R-PP1) comprises, especially consist of, monomers copolymerizable with propylene from the group consisting of ethylene, 1-butene and 1-hexene. More specifically the random propylene copolymer (R-PP) comprises - apart from propylene - units derivable from ethylene and/or 1-butene. In a preferred embodiment the random propylene copolymer (R-PP) comprises units derivable from ethylene and propylene only. The comonomer content in the random propylene copolymer (R-PP) is preferably relatively low, i.e. from 0.5 to 10.0 wt.-%, more preferably 0.8 to 8.0 wt.-%, yet more preferably 1.0 to 6.0 wt.-%.

The term random is understood according to IUPAC (Glossary of basic terms in polymer science; IUPAC recommendations 1996). Accordingly it is preferred that the random propylene copolymer (R-PP) has a randomness of at least 40 %, more preferably of at least 50 %, yet more preferably at least 55 %, even more preferably of at least 60 %, and still more preferably of at least 65 %.

Even more preferably the random propylene copolymer (R-PP) fulfills the equation (I), still more preferably fulfills the equation (Ia), yet more preferably fulfills the equation (Ib),

$$R + 4.96 \text{ x } C \leq 95.66 \quad (I)$$

$$R + 4.30 \text{ x } C \leq 94.66 \quad (Ia)$$

$$R + 4.30 \text{ x } C \leq 93.66 \quad (Ib)$$

wherein

R is the randomness [%] measured by Fourier transform infrared spectroscopy (FTIR), and
C is the comonomer content [wt.-%] measured by Fourier transform infrared spectroscopy (FTIR).

Preferably the random propylene copolymer (R-PP) is isotactic. Accordingly it is appreciated that random propylene copolymer (R-PP) has a rather high isotactic triad concentration, i.e. higher than 90 %, more preferably higher than 92 %, still more preferably higher than 93 % and yet more preferably higher than 95 %, like higher than 97 %.

Preferably the melting temperature ($T_m$) measured by differential scanning calorimetry (DSC) of the random propylene copolymer (R-PP) is in the range of 140 to 164°C, more preferably in the range of 145 to 162 °C.

Further it is appreciated that the xylene soluble content of the random propylene copolymer (R-PP) is a rather low. Accordingly the random propylene copolymer (R-PP) has preferably a xylene cold soluble fraction (XCS) measured according to ISO 6427 (23 °C) of not more than 12.0 wt.-%, more preferably of not more than 9.0 wt.-%. Thus a preferred range is 1.0 to 12.0 wt.-%, more preferred 1.2 to 9.0 wt.-%.

The random propylene copolymer (R-PP) can be unimodal or multimodal, like bimodal in view of the molecular weight distribution and/or the comonomer content distribution.

When the random propylene copolymer (R-PP) is unimodal with respect to the molecular weight distribution and/or comonomer content, it may be prepared in a single stage process e.g. as slurry or gas phase process in a slurry or gas phase reactor. Preferably, the unimodal the random propylene copolymer (R-PP) is polymerized as a slurry polymerization. Alternatively, the unimodal the random propylene copolymer (R-PP) may be produced in a multistage process using at each stage process conditions which result in similar polymer properties.

The expression "multimodal" or "bimodal" used herein refers to the modality of the polymer, i. e.

- the form of its molecular weight distribution curve, which is the graph of the molecular weight fraction as a function of its molecular weight,
or more preferably
- the form of its comonomer content distribution curve, which is the graph of the comonomer content as a function of the molecular weight of the polymer fractions.

The polymer components of the the random propylene copolymer (R-PP) can be produced in a sequential step process, using reactors in serial configuration and operating at different reaction conditions. As a consequence, each fraction prepared in a specific reactor will have its own molecular weight distribution and/or comonomer content distribution.

When the distribution curves (molecular weight or comonomer content) from these fractions are superimposed to obtain the molecular weight distribution curve or the comonomer content distribution curve of the final polymer, these curves may show two or more maxima or at least be distinctly broadened when compared with curves for the individual fractions. Such a polymer, produced in two or more serial steps, is called bimodal or multimodal, depending on the number of steps.

Accordingly the random propylene copolymer (R-PP) may be multimodal, like bimodal, in view of the comonomer content and/or molecular weight. It is in particular appreciated that the the random propylene copolymer (R-PP) is multimodal, like bimodal, in view of the comonomer content.

Further in case the random propylene copolymer (R-PP) is of multimodal, like bimodal, character, in particular multimodal, like bimodal, in view of the comonomer content, it is appreciated that the individual fractions are present in amounts influencing the properties of the material. Accordingly it is appreciated that each of these fractions is at least present in the amount of 10 wt.-% based on the random propylene copolymer (R-PP). Accordingly in case of a bimodal system, in particular in view of the comonomer content, the split of the two fractions is roughly 50 : 50.

Thus in one embodiment the random propylene copolymer (R-PP) comprises two fractions which differ in their comonomer content, like ethylene content (preferably as the only comonomer in the random propylene copolymer (R-PP)), wherein the first fraction is present from 40 to 60 wt.-% and the second fraction from 60 to 40 wt.-%. In such a case the random propylene copolymer (R-PP) comprises at least two fractions, more preferably consists of two fractions, that have a comonomer content, like ethylene content, which differ of at least 2.0 wt.-%, more preferably differ of at least 2.5 wt.-%. On the other hand the difference in the comonomer content in the two fractions should be not too high, i.e. not higher than 6.0 wt.-%, preferably not higher than 5.0 wt%, to avoid any separation tendencies. Thus it is appreciated that the random propylene copolymer (R-PP) comprises at least two fractions, more preferably consists of two fractions, that have comonomer contents which differ of 2.0 to 6.0 wt.-%, more preferably of 2.5 to 5.0 wt.-%. Accordingly in one embodiment the random propylene copolymer (R-PP) consists of a first fraction being a propylene homopolymer and a second fraction being a propylene copolymer having a comonomer content, preferably ethylene content, of at least 2.0 wt.-%, more preferably of at least 3.0 wt.-%, like at least 3.5 wt.-%.

In particular suitable random propylene copolymers (R-PP) are those as for instance described in EP 1 580 207 A1 and WO 2003/002639 A1.

As already indicated above, the present invention is directed to the use of the masterbatch (M) for improving the stiffness and transparency of the random propylene copolymer (R-PP). More precisely the present invention is directed to the use of the masterbatch (M) for increasing the tensile modulus and lowering the haze of the random propylene copolymer (R-PP). The present invention is in particular directed to the use of the masterbatch (M) for improving the stiffness and transparency, i.e. for increasing the tensile modulus and lowering the haze, of injection molded or injection stretch blow molded articles made from the random propylene copolymer (R-PP). Accordingly the present invention is especially directed to the use of the masterbatch (M) for

(a) improving the tensile modulus [MPa] of the random propylene copolymer (R-PP), preferably of an injection molded or an injection stretch blow molded article made from the random propylene copolymer (R-PP), by a factor of at least 1.12, more preferably by a factor of at least 1.14
and
(b) lowering the haze [%] of the random propylene copolymer (R-PP), preferably of an injection molded or an injection stretch blow molded article made from the random propylene copolymer (R-PP), by a factor of at least 1.7, more preferably by a factor of at least 1.8, yet more preferably by a factor of at least 1.9.

The tensile modulus is measured according to ISO 527, more preferably according to ISO 527-2 at +23 °C on injection molded specimen (type 1B, 4 mm thickness). The factor has been evaluated from the quotient for tensile modulus [MPa] of the random propylene copolymer (R-PP) containing the masterbatch (M) and the tensile modulus [MPa] of the random propylene copolymer (R-PP) without the masterbatch (M) [R-PP(with M) / R-PP(without M)].

The haze is measured according to ASTM D 1003-07, more preferably according to ASTM D 1003-07 on injection molded plaque samples of 60x60x2 mm$^3$. The factor has been evaluated from the quotient for the haze [%] of the random propylene copolymer (R-PP) without the masterbatch (M) and the haze [%] of the random propylene copolymer (R-PP) containing the masterbatch (M) [R-PP(without M) / R-PP(with M)].

Keeping the above said in mind the present invention is also directed to the preparation of an injection molded (IM) article, an extrusion blow molded (EBM) article or an injection stretch blow molded (ISBM) article using the masterbatch according to this invention. Accordingly the present invention is directed to a process for producing an injection molded (IM) article comprising the steps of

(A1) premixing a masterbatch (M) and a random propylene copolymer (R-PP) in a melt mixing device like an extruder obtaining thereby a mixture,
(B1) solidifying and pelletizing said mixture,
(C1) melting and extruding said mixture obtaining thereby a molten mixture,
(D1) injecting said molten mixture into a mold obtaining a formed article, and
(E1) cooling said formed article and subsequently ejecting said formed article,
or
(A2) feeding a masterbatch (M) and a random propylene copolymer (R-PP) into an extruder obtaining thereby a mixture,

(B2) extruding said mixture obtaining thereby a molten mixture,

(C2) injecting said molten mixture into a mold obtaining a formed article,

(D2) cooling said formed article and subsequently ejecting said formed article, wherein

(a) the masterbatch (M) comprises a polypropylene (PP1) and an α-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ α-olefin,

(b) the random propylene copolymer (R-PP) has a comonomer content in the range of above 0.5 to 10.0 wt.-%, the comonomers are ethylene and/or at least one $C_4$ to $C_{12}$ α-olefin,

(c) the polypropylene (PP1) has a melt flow rate MFR2 (230°C) measured according to ISO 1133 of at least 500.0 g/10 min,

(d) the polypropylene (PP1) and the random propylene copolymer (R-PP) fulfill the relation (1), preferably relation (1a), yet more preferably relation (1b),

$$0.4 \text{ x MFR (R-PP)} \leq \text{MFR (PP1)} \leq 500 \text{ x MFR (R-PP)} \quad (1)$$

$$0.5 \text{ x MFR (R-PP)} \leq \text{MFR (PP1)} \leq 400 \text{ x MFR (R-PP)} \quad (1a)$$

$$0.55 \text{ x MFR (R-PP)} \leq \text{MFR (PP1)} \leq 300 \text{ x MFR (R-PP)} \quad (1b)$$

wherein

MFR (R-PP) is melt flow rate $MFR_2$ (230 °C) [g/10min] measured according to ISO 1133 of the random propylene copolymer (R-PP) without the masterbatch (M), and

MFR (PP1) is melt flow rate $MFR_2$ (230 °C) [g/10min] measured according to ISO 1133 of the polypropylene (PP1).

In case of the preparation of an extrusion blow molded (EBM) article the process comprises the steps of

(A1) premixing a masterbatch (M) and a random propylene copolymer (R-PP) in a melt mixing device like an extruder obtaining thereby a mixture,

(B1) solidifying and pelletizing said mixture,

(C1) melting and extruding said mixture obtaining thereby obtaining a molten mixture,

(D1) extruding said molten mixture into a melt tube (parison),

(E1) blowing said parison into a formed article,

(F1) cooling and subsequently ejecting said formed article,

or

(A2) feeding a masterbatch (M) and a random propylene copolymer (R-PP) into an extruder obtaining thereby a mixture

(B2) extruding said mixture obtaining thereby a molten mixture,

(C2) extruding said molten mixture into a melt tube (parison),

(D2) blowing said parison into a formed article,

(E2) cooling and subsequently ejecting said formed article,

wherein

(a) the masterbatch (M) comprises a polypropylene (PP1) and an α-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ α-olefin,

(b) the random propylene copolymer (R-PP) has a comonomer content in the range of above 0.5 to 10.0 wt.-%, the comonomers are ethylene and/or at least one $C_4$ to $C_{12}$ α-olefin,

(c) the polypropylene (PP1) has a melt flow rate MFR2 (230°C) measured according to ISO 1133 of at least 500.0 g/10 min,
(d) the polypropylene (PP1) and the random propylene copolymer (R-PP) fulfill the relation (1), preferably relation (1a), yet more preferably relation (1b),

$$0.4 \text{ x MFR (R-PP)} \leq \text{MFR (PP1)} \leq 500 \text{ x MFR (R-PP)} \quad (1)$$

$$0.5 \text{ x MFR (R-PP)} \leq \text{MFR (PP1)} \leq 400 \text{ x MFR (R-PP)} \quad (1a)$$

$$0.55 \text{ x MFR (R-PP)} \leq \text{MFR (PP1)} \leq 300 \text{ x MFR (R-PP)} \quad (1b)$$

wherein

MFR (R-PP) is melt flow rate $MFR_2$ (230 °C) [g/10min] measured according to ISO 1133 of the random propylene copolymer (R-PP) without the masterbatch (M), and MFR (PP1) is melt flow rate $MFR_2$ (230 °C) [g/10min] measured according to ISO 1133 of the polypropylene (PP1).

In case of the preparation of an injection stretch blow molded (ISBM) article the process comprises the steps of

(A1) premixing a masterbatch (M) and a random propylene copolymer (R-PP) in a melt mixing device like an extruder obtaining thereby a mixture,
(B1) solidifying and pelletizing said mixture,
(C1) melting and extruding said mixture obtaining thereby obtaining a molten mixture,
(D1) injecting said molten mixture into a perform mold obtaining a preform,
(E1) optionally cooling and re-heating, then stretching said preform,
(F1) blowing said preform into a formed article,
(G1) cooling and subsequently ejecting said formed article,
or
(A2) feeding a masterbatch (M) and a random propylene copolymer (R-PP) into an extruder obtaining thereby a mixture
(B2) extruding said mixture obtaining thereby a molten mixture,
(C2) injecting said molten mixture into a perform mold obtaining a preform,
(D2) optionally cooling and re-heating, then stretching said preform,
(E2) blowing said preform into a formed article,
(F2) cooling and subsequently ejecting said formed article,

wherein

(a) the masterbatch (M) comprises a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,
(b) the random propylene copolymer (R-PP) has a comonomer content in the range of above 0.5 to 10.0 wt.-%, the comonomers are ethylene and/or at least one $C_4$ to $C_{12}$ $\alpha$-olefin,
(c) the polypropylene (PP1) has a melt flow rate MFR2 (230°C) measured according to ISO 1133 of at least 500.0 g/10 min,
(d) the polypropylene (PP1) and the random propylene copolymer (R-PP) fulfill the relation (1), preferably relation (1a), yet more preferably relation (1b),

$$0.4 \text{ x MFR (R-PP)} \leq \text{MFR (PP1)} \leq 500 \text{ x MFR (R-PP)} \quad (1)$$

$$0.5 \text{ x MFR (R-PP)} \le \text{MFR (PP1)} \le 400 \text{ x MFR (R-PP)} \quad (1a)$$

$$0.55 \text{ x MFR (R-PP)} \le \text{MFR (PP1)} \le 300 \text{ x MFR (R-PP)} \quad (1b)$$

wherein

MFR (R-PP) is melt flow rate $MFR_2$ (230 °C) [g/10min] measured according to ISO 1133 of the random propylene copolymer (R-PP) without the masterbatch (M), and MFR (PP1) is melt flow rate $MFR_2$ (230 °C) [g/10min] measured according to ISO 1133 of the polypropylene (PP1).

Concerning the preferred embodiments of the masterbatch (M), the polypropylene (PP1), the $\alpha$-nucleating agent, and the random propylene copolymer (R-PP) and the mixing ratios of the individual components it is referred to the comments made above.

Concerning the detailed process of injection molding or injection stretch blow molding reference is made to "Polypropylene Handbook", 2005, Hanser, ISBN 1-56990-385-9, "Injection Molding", 2008, Hanser, ISBN-13: 978-1-56990-419-0, as well as to "Saechtling Kunststoff Taschenbuch", 2007, Hanser, ISBN: 978-3-446-40352-9.

The preparation of the polypropylene (PP1) and the random propylene copolymer (R-PP) is state of the art. For instance the polypropylene (PP1) and the random propylene copolymer (R-PP) may be prepared by polymerizing, in a slurry reactor, for example a loop reactor, propylene optionally together with at least another $C_2$ to $C_{12}$ $\alpha$-olefin (comonomers), in the presence of a polymerization catalyst to produce a part of the polymer. This part is then transferred to a subsequent gas phase reactor, wherein in the gas phase reactor propylene is reacted optionally in the presence of suitably selected other $C_2$ to $C_{12}$ $\alpha$-olefin(s) (comonomers) in order to produce a further part in the presence of the reaction product of the first step. This reaction sequence provides a reactor blend of parts (i) (fraction (A)) and (ii) (fraction (B)) constituting the polypropylene (PP1) or the random propylene copolymer (R-PP). It is of course possible by the present invention that the first reaction is carried out in a gas phase reactor while the second polymerization reaction is carried out in a slurry reactor, for example a loop reactor. It is furthermore also possible to reverse the order of producing parts (i) and (ii), which has been described above in the order of first producing part (i) and then producing part (ii). The above-discussed process, comprising at least two polymerization steps, is advantageous in view of the fact that it provides easily controllable reaction steps enabling the preparation of a desired reactor blend. The polymerization steps may be adjusted, for example by appropriately selecting monomer feed, comonomer feed, hydrogen feed, temperature and pressure in order to suitably adjust the properties of the polymerization products obtained. It is in particular possible to obtain a multimodality, preferably the bimodality, of the polymer, with respect to the comonomer, like ethylene, distribution as well as with respect to the molecular weights and $MFR_2$ (230 °C) values during said multistage polymerization procedures.

Such a process can be carried out using any suitable catalyst, like a metallocene or a Ziegler-Natta catalyst, for the preparation of the polypropylenes. Preferably, the process as discussed above is carried out using a Ziegler-Natta catalyst, in particular a high yield Ziegler-Natta catalyst (so-called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843.

Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar® technology, described for example in EP 0 887 379 A1 and WO 92/12182.

With respect to the above-mentioned preferred slurry-gas phase process, the following general information can be provided with respect to the process conditions.

Temperature of from 40 to 110 °C, preferably between 60 and 100 °C, in particular between 80 and 90 °C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50 to 130 °C, more preferably 80 to 100 °C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the polypropylene (PP1) or the random propylene copolymer (R-PP) produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of a multimodal polymer.

Finally the present invention is directed to a composition obtained by mixing the masterbatch (M) and the random propylene copolymer (R-PP) as defined above. Accordingly the present invention is directed to polypropylene composition comprising

(a) at least 80 wt.-%, preferably in the range of 85.0 wt.-% to 95.5 wt.-%, of a random propylene copolymer (R-PP),
(b) at least 0.5 wt.-% of a polypropylene (PP1), preferably 3.0 to 14.5 wt.-%, and
(c) 0.0005 to 3.0 wt.-%, preferably 0.001 to 1.5 wt.-%, most preferably 0,05 to 1.0 wt% of and an $\alpha$-nucleating agent (N),

based on the total amount of the polypropylene composition, preferably based on the total amount of the random propylene copolymer (R-PP), the polypropylene (PP1), and the $\alpha$-nucleating agent (N) together.
wherein

(i) the polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,
(ii) the random propylene copolymer (R-PP) has a comonomer content in the range of above 0.5 to 10.0 wt.-%, the comonomers are ethylene and/or at least one $C_4$ to $C_{12}$ $\alpha$-olefin,
(iii) the polypropylene (PP1) has a melt flow rate MFR2 (230°C) measured according to ISO 1133 of at least 500.0 g/10 min,
(iv) the polypropylene (PP1) and the random propylene copolymer (R-PP) fulfill the relation (1), preferably relation (1a), yet more preferably relation (1b),

$$0.4 \text{ x MFR (R-PP)} \leq \text{MFR (PP1)} \leq 500 \text{ x MFR (R-PP)} \quad (1)$$

$$0.5 \text{ x MFR (R-PP)} \leq \text{MFR (PP1)} \leq 400 \text{ x MFR (R-PP)} \quad (1a)$$

$$0.55 \text{ x MFR (R-PP)} \leq \text{MFR (PP1)} \leq 300 \text{ x MFR (R-PP)} \quad (1b)$$

wherein

MFR (R-PP) is melt flow rate MFR$_2$ (230 °C) [g/10min] measured according to ISO 1133 of the random propylene copolymer (R-PP), and
MFR (PP1) is melt flow rate MFR$_2$ (230 °C) [g/10min] measured according to ISO 1133 of the polypropylene (PP1).

Preferably the random propylene copolymer (R-PP) and the polypropylene (PP1) are the only polymer components within the composition. Accordingly it is preferred that the random propylene copolymer (R-PP) and the polypropylene (PP1) together make up at least 90 wt.-%, more preferably at least 95 wt.-% of the composition.

Preferably the polypropylene (PP1) is a propylene homopolymer (H-PP1).

The random propylene copolymer (R-PP) is preferably featured by the equation (I), yet more preferably by the equation (Ia), yet more preferably by the equation (Ib),

$$R + 4.96 \text{ x C} \leq 95.66 \quad (I)$$

$$R + 4.30 \text{ x C} \leq 94.66 \quad (Ia)$$

$$R + 4.30 \text{ x } C \leq 93.66 \quad \text{(Ib)}$$

wherein

R is the randomness [%] measured by Fourier transform infrared spectroscopy (FTIR), and
C is the comonomer content [wt.-%] measured by Fourier transform infrared spectroscopy (FTIR).

Further it is appreciated that the polypropylene composition as defined herein has a rather high crystallization temperature ($T_c$). Thus it is preferred that the polypropylene composition has a crystallization temperature ($T_c$) measured by differential scanning calorimetry (DSC) of at least 108 °C, more preferably of at least 112 °C. Accordingly the polypropylene composition has preferably a crystallization temperature ($T_c$) measured by differential scanning calorimetry (DSC) in the range of 108 to 135 °C, more preferably in the range of 115 to 130 °C

Concerning further preferred embodiments of the polypropylene (PP1), the random propylene copolymer (R-PP), and the $\alpha$-nucleating agent (N) part of the polypropylene composition it is referred to the comments made above.

The present invention is also directed to an injection molded article, extrusion blow molded (EBM) and an injection stretch blow molded (ISBM) article comprising, preferably comprising by at least 80 wt.-%, more preferably comprising by at least 90 wt.-%, yet more preferably consisting of, said composition.

The present invention will now be described in further detail by the examples provided below.

## EXAMPLES

### 1. Definitions/Measuring Methods

The following definitions of terms and determination methods apply for the above general description of the invention as well as to the below examples unless otherwise defined.

### NMR-spectroscopy measurements:

The $^{13}$C-NMR spectra of polypropylenes were recorded on Bruker 400MHz spectrometer at 130 °C from samples dissolved in 1,2,4-trichlorobenzene/benzene-d6 (90/10 w/w). For the triad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the mm triad concentration in a manner well known in the art.

**Melting temperature Tm, crystallization temperature Tc:** measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and enthalpy are determined from the cooling step, while melting temperature and melting enthalpy are determined from the second heating step

**Charpy notched** was determined according to ISO 179-1eA:2000 on V-notched samples of 80x10x4 mm$^3$ at +23 °C. The test specimens were prepared by injection molding according to ISO 1873-2.

**The tensile modulus (E-modulus):** Tensile tests are performed according to ISO 527-2 at +23 °C on injection molded specimen (type 1B, 4 mm thickness) prepared by injection molding according to ISO 1873-2. The tensile modulus (E-modulus) was calculated from the linear part of said tensile test results, conducting that part of the measurement with an elongation rate of 1 mm/min

**Haze** is determined on injection molded plaque samples of 60x60x2 mm$^3$ and 60x60x1 mm$^3$ according to ASTM D 1003-07. The samples have been prepared by injection molding in line with ISO 1873-2.

### Randomness

In the FTIR measurements, films of 250 -mm thickness were compression moulded at 225 °C and investigated on a Perkin-Elmer System 2000 FTIR instrument. The ethylene peak area (760-700 cm$^{-1}$) was used as a measure of total ethylene content. The absorption band for the structure -P-E-P- (one ethylene unit between propylene units), occurs at 733 cm$^{-1}$. This band characterizes the random ethylene content. For longer ethylene sequences (more than two units), an absorption band occurs at 720 cm$^{-1}$. Generally, a shoulder corresponding to longer ethylene runs is observed for the random copolymers. The calibration for total ethylene content based on the area and random ethylene (PEP) content based on peak height at 733 cm$^{-1}$ was made by $^{13}$C-NMR. (Thermochimica Acta, 66 (1990) 53-68).

Randomness = random ethylene (-P-E-P-) content / the total ethylene content x 100%.

**Number average molecular weight ($M_n$), weight average molecular weight ($M_w$) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**$MFR_2$ (230 °C)** is measured according to ISO 1133 (230 °C, 2.16 kg load)

**Ethylene content** is measured with Fourier transform infrared spectroscopy (FTIR) calibrated with $^{13}$C-NMR. When measuring the ethylene content in polypropylene, a thin film of the sample (thickness about 250 mm) was prepared by hot-pressing. The area of absorption peaks 720 and 733 cm$^{-1}$ was measured with Perkin Elmer FTIR 1600 spectrometer. The method was calibrated by ethylene content data measured by $^{13}$C-NMR. **Content of any one of the C4 to C20 $\alpha$-olefins** is determined with $^{13}$C-NMR; literature: "IR-Spektroskopie fur Anwender"; WILEY-VCH, 1997 and "Validierung in der Analytik", WILEY-VCH, 1997

**The xylene cold solubles (XCS, wt.-%)**: Content of xylene cold solubles (XCS) is determined at 23 °C according ISO 6427.

**Determination of the nucleating agent** (DMDBS, Millad 3988) in polyolefins Sample preparation: Cryo-milling of the polyolefin pellets using liquid nitrogen and a 1 mm sieve-inlet is followed by extraction of ∼ 0.5 g of the milled sample with 3 ml of a mixture of tetrahydrofurane and methanole (7:3 v/v) using 50 mg 1-1 Tinuvin 120 as internal standard for 90 minutes at 85 °C under stirring in a closed vessel. After cooling to room temperature the suspension is pressed through a 0.45 $\mu$m syringe filter (regenerated cellulose) into a 2 ml auto sampler vial.

Quantification by HPLC/UV: The adjacent high performance liquid chromatography (HPLC) uses a gradient of an aqueous buffer solution of 2.73 g 1-1 KH2PO4 (>99.5%) and 1.93 g 1-1H3PO4 (85%) (A), acetonitrile (B) and methanol (C). Both acetonitrile and methanol are of gradient grade quality:

| Time | A / % | B / % | C / % |
|---|---|---|---|
| 0 min | 50 | 10 | 40 |
| 2 min | 50 | 10 | 40 |
| 8 min | 0 | 10 | 90 |
| 15 min | 0 | 70 | 30 |

The detection wavelength is 276 nm (reference wavelength: 450 nm, bandwidth 4 nm), the flow is 1 ml min-1 and the injection volume is 10 $\mu$l. The temperature is held at 30 °C. As precolumn, a 4x4mm, Lichrosphere 100 RP 18, 5$\mu$m and for separation a 125x4mm, Lichrosphere 100 RP 18, 5 $\mu$m is used. The quantitation is based upon external calibration of Millad 3988 in a mixture of tetrahydrofurane and methanole (7/3 v/v) in the range of 20-1200 mg 1-1 using 160 mg 1-1 Tinuvin 120 as internal standard.

## 2. Preparation of the Examples

### Polymer preparation H-PP1

Base polymer for masterbatch M2 is the experimental propylene homopolymer H-PP1 which has been produced in a Borstar PP pilot plant as follows: The catalyst as described in example 1 of EP 1741725 A1 was fed together with triethylaluminium as cocatalyst with a Al/Zr ratio [mol/mol] of 910:1 into a stirred tank prepolymerization reactor together with propylene and hydrogen in a ratio of 0.2 mol/kmol propylene, the reactor being operated at 35°C with an average residence time of 0.4 hours. The main polymerization step was carried out in a loop reactor at a temperature of 70°C and a pressure of 6000 kPa feeding additional propylene at 135 kg/h with hydrogen in a ratio of 0.35 mol/kmol propylene, maintaining an average residence time of 0.63 hours, and achieving a catalyst productivity of 16.5 kg/g. After deactivation of the catalyst with steam and drying of the resulting polymer powder with warm nitrogen, the resulting polypropylene homopolymer was compounded together with 0.07 wt% Calcium Stearate and 0.60 % Irganox B225 (antioxidant combination supplied by Ciba Specialty Chemicals) in a twin screw extruder at 230 to 250 °C. The resulting propylene homopolymer has an MFR (230°C/2.16 kg) of 700 g/10 min, a density of 902 kg/m$^3$, a melting point of 152°C and an XS content of 1.4 wt.-%.

**Polymer preparation R-PP**

R-PP is an experimental propylene-ethyene random copolymer VPPP ZNC which has been produced in a Borstar PP pilot plant as follows: The catalyst used in the polymerization was prepared according to WO 92/19653 with dioctylphthalate as dialkylphthalate of the formula (III) and ethanol as alcohol, the cocatalyst was triethylaluminium and as an external donor (ED) dicyclopentyl-dimethoxysilane was used. The catalyst combination having an AL/Ti ratio of 159:1 mol/mol and an Al/ED ratio of 5:1 mol/mol was fed at a rate of 2.5 g/h into a stirred tank prepolymerization reactor together with propylene and hydrogen in a ratio of 0.1 mol/kmol propylene, the reactor being operated at 30°C with an average residence time of 0.36 hours. The first part of the main polymerization step was carried out in a loop reactor at a temperature of 75°C and a pressure of 5600 kPa feeding additional propylene at 150 kg/h with ethylene in a ratio of 30 mol/kmol propylene and hydrogen in a ratio of 12 mol/kmol propylene, and maintaining an average residence time of 0.4 hours. This was followed by the second part of the main polymerization in a gas phase reactor at a temperature of 80°C and a pressure of 2000 kPa, feeding additional propylene at 30 kg/h with ethylene in a ratio of 30 mol/kmol propylene and hydrogen in a ratio of 16 mol/kmol propylene, and maintaining an average residence time of 0.97 hours. An overall catalyst productivity of 23 kg/g was achieved. After deactivation of the catalyst with steam and drying of the resulting polymer powder with warm nitrogen, the resulting polypropylene homopolymer was compounded together with 0.07 wt% Calcium Stearate and 0.60 % Irganox B225 (antioxidant combination supplied by Ciba Specialty Chemicals) in a twin screw extruder at 230 to 250 °C. The resulting propylene-ethylene random copolymer has an MFR (230°C/2.16 kg) of 12 g/10 min, a density of 904 kg/m$^3$, an ethylene content of 3.4 wt%, a melting point of 150°C and an XS content of 5.5 wt.-%.

All compositions as listed in the tables 1 were prepared by melt compounding in a Thermo Prism TSE24 co-rotating twin screw extruder (screw diameter 24 mm, L/D ratio 40) with two high intensity mixing segments at temperatures between 190 °C and 230 °C at a throughput of 10 kg/h and a screw speed of 300 rpm.

Table 1: Properties

| Example | | IE1 | IE2 | IE3 | IE4 | CE1 | CE2 | CE3 | CE4 |
|---|---|---|---|---|---|---|---|---|---|
| R-PP | [wt.-%] | 90 | 95 | 95 | 90 | 100 | 99.83 | 99.85 | 90 |
| M 1 | [wt.-%] | - | - | 10 | 5 | - | - | - | - |
| M2 | [wt.-%] | 10 | 5 | - | - | - | - | - | - |
| M 3 | [wt.-%] | - | - | - | - | - | - | - | 10 |
| NA | [wt.-%] | - | - | - | - | 0 | 0.17 | 0.15 | - |
| MFR | [g/10min] | 17 | 16 | 13 | 14 | 12 | 13 | 13 | 11 |
| T$_m$ | [°C] | 150 | 150 | 154 | 153 | 151 | 151 | 151 | 150 |
| T$_c$ | [°C] | 123 | 122 | 122 | 119 | 103 | 120 | 121 | 118 |
| Tensile modulus | [MPa] | 1417 | 1633 | 1398 | 1255 | 1096 | 1055 | 1030 | 1012 |
| Notched Charpy [23°C] | [kJ/m$^2$] | 3.3 | 2.1 | 4.1 | 4.8 | 3.2 | 5.1 | 5.0 | 4.8 |
| Haze [1 mm] | [%] | 15 | 17 | 13 | 20 | 38 | 16 | 20 | 25 |
| Haze [2 mm] | [%] | 30 | 40 | 27 | 43 | 62 | 31 | 38 | 51 |

**M 1** masterbatch consisting of the commercial propylene homopolymer HD 120 MO of Borealis AG (MFR$_2$ (230 °C) of 8 g/10min) and 2 wt.-% of Millad 3988, which is the α-nucleating agent 1,3:2,4-dibenzylidenesorbitol (CAS No. 135861-56-2) commercially available from Miliken Co., USA; the masterbatch was produced by melt mixing in a Thermo Prism TSE24 co-rotating twin screw extruder (screw diameter 24 mm, L/D ratio 40) with two high intensity mixing segments at temperatures between 190 °C and 230 °C at a throughput of 10 kg/h and a screw speed of 300 rpm

**M 2** masterbatch consisting of the experimental propylene homopolymer H-PP1 as described above and 2 wt.-% of Millad 3988, which is the α-nucleating agent 1,3:2,4-dibenzylidenesorbitol (CAS No. 135861-56-2) commercially available from Miliken Co., USA; the masterbatch was produced by melt mixing in a Thermo Prism TSE24 co-rotating twin screw extruder (screw diameter 24 mm, L/D ratio 40) with two high intensity mixing segments at temperatures between 190 °C and 230 °C at a throughput of 10 kg/h and a screw speed of 300 rpm

**M 3** masterbatch of the commercial propylene homopolymer DM55 of Borealis AG (MFR$_2$ (230 °C) of 2.5 g/10min) and 2 wt.-% of Millad 3988, which is the α-nucleating agent 1,3:2,4-dibenzylidenesorbitol (CAS No. 135861-56-2) commercially available from Miliken Co., USA; the masterbatch was produced by melt mixing in a Thermo Prism TSE24 co-rotating twin screw extruder (screw diameter 24 mm, L/D ratio 40) with two high intensity mixing segments at temperatures between 190 °C and 230 °C at a throughput of 10 kg/h and a screw speed of 300 rpm

**NA** Millad 3988, which is the $\alpha$-nucleating agent 1,3:2,4-dibenzylidenesorbitol (CAS No. 135861-56-2) commercially available from Miliken Co., USA

**Claims**

1. Use of a masterbatch (M) in a random propylene copolymer (R-PP) for improving transparency and stiffness, wherein

(a) the masterbatch (M) comprises a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,
(b) the random propylene copolymer (R-PP) has a comonomer content in the range of above 0.5 to 10.0 wt.-%, the comonomers are ethylene and/or at least one $C_4$ to $C_{12}$ $\alpha$-olefin,
(c) the polypropylene (PP1) has a melt flow rate $MFR_2$ (230 °C) measured according to ISO 1133 of at least 500.0 g/10min,
(d) the polypropylene (PP1) and the random propylene copolymer (R-PP) fulfill the relation (1)

$$0.4 \text{ x } MFR \text{ (R-PP)} \leq MFR \text{ (PP1)} \leq 500 \text{ x } MFR \text{ (R-PP)} \quad (1)$$

wherein

MFR (R-PP) is melt flow rate $MFR_2$ (230 °C) [g/10min] measured according to ISO 1133 of the random propylene copolymer (R-PP) without the masterbatch (M), and MFR (PP1) is melt flow rate $MFR_2$ (230 °C) [g/10min] measured according to ISO 1133 of the polypropylene (PP1).

2. Use according to claim 1, wherein

(a) the random propylene copolymer (R-PP) without the masterbatch (M) has a melt flow rate $MFR_2$ (230 °C) measured according to ISO 1133 in the range of above 1.8 to below 150.0 g/10min, and/or
(b) the polypropylene (PP1) has a melt flow rate $MFR_2$ (230 °C) measured according to ISO 1133 below 20,000.0 g/10min.

3. Use according to claim 1 or 2, wherein

(a) tensile modulus [MPa] measured according to ISO 527 of the random propylene copolymer (R-PP) is increased at least by a factor of 1.12, wherein the factor is evaluated from the quotient for tensile modulus [MPa] of the random propylene copolymer (R-PP) containing the masterbatch (M) and the tensile modulus [MPa] of the random propylene copolymer (R-PP) without the masterbatch (M) [R-PP (with M) / R-PP (without M)], and
(b) the haze [%] measured according to ASTM 1003 (1 mm thickness) of the random propylene copolymer (R-PP) is lowered at least by of a factor 1.8, wherein the factor has been evaluated from the quotient for the haze [%] of the random propylene copolymer (R-PP) without the masterbatch (M) and the haze [%] of the random propylene copolymer (R-PP) containing the masterbatch (M) [R-PP (without M) / R-PP (with M)].

4. Use according to any one of the preceding claims, wherein the weight ratio of masterbatch (M) to random propylene copolymer (R-PP) [M/R-PP] is from 0.5/99.5 to 15.0/85.0.

5. Use according to any one of the preceding claims, wherein the weight ratio of the $\alpha$-nucleating agent (N) to the polypropylene (PP1) [N/PP1] in the masterbatch (M) is from 1.0/99.0 to 25.0/75.0.

6. Use according to any one of the preceding claims, wherein the polypropylene (PP1) is a propylene homopolymer (H-PP1).

7. Use according to any one of the preceding claims, wherein the polypropylene (PP1) has a xylene cold soluble (XCS) fraction of up to 12.0 wt.-%.

8. Use according to any one of the preceding claims, wherein

   (a) the polypropylene (PP1) has a melting temperature Tm measured by differential scanning calorimetry (DSC) above 130 °C,
   and/or
   (b) the masterbatch (M) has crystallization temperature Tc measured by differential scanning calorimetry (DSC) in the range of 108 to 135 °C.

9. Use according to any one of the preceding claims, wherein the $\alpha$-nucleating agent (N) is selected from the group consisting of sorbitol derivatives, nonitol derivatives, benzene-trisamides and mixtures thereof.

10. Use according to any one of the preceding claims, wherein the random propylene copolymer (R-PP) fulfills the equation (I)

$$R + 4.96 \text{ x } C \leq 95.66 \quad (I)$$

   wherein

   R is the randomness [%] measured by Fourier transform infrared spectroscopy (FTIR), and
   C is the comonomer content [wt.-%] measured by Fourier transform infrared spectroscopy (FTIR).

11. Use according to any one of the preceding claims, wherein the random propylene copolymer (R-PP) has

   (a) a melting temperature Tc measured by differential scanning calorimetry (DSC) in the range of 140 to 164 °C,
   and/or
   (b) a xylene cold soluble fraction (XCS) of not more than 12.0 wt-%.

12. Process for producing an injection molded (IM) article comprising the steps of

   (A1) premixing a masterbatch (M) and a random propylene copolymer (R-PP) in a melt mixing device obtaining thereby a mixture,
   (B1) solidifying and pelletizing said mixture,
   (C1) melting and extruding said mixture obtaining thereby a molten mixture,
   (D1) injecting said molten mixture into a mold obtaining a formed article, and
   (E1) cooling said formed article and subsequently ejecting said formed article,
   or
   (A2) feeding a masterbatch (M) and a random propylene copolymer (R-PP) into an extruder obtaining thereby a mixture,
   (B2) extruding said mixture obtaining thereby a molten mixture,
   (C2) injecting said molten mixture into a mold obtaining a formed article,
   (D2) cooling said formed article and subsequently ejecting said formed article,

   wherein

   (a) the masterbatch (M) comprises a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one C$_4$ to C$_{12}$ $\alpha$-olefin,
   (b) the random propylene copolymer (R-PP) has a comonomer content in the range of above 0.5 to 10.0 wt.-%, the comonomers are ethylene and/or at least one C$_4$ to C$_{12}$ $\alpha$-olefin,

(c) the polypropylene (PP1) has a melt flow rate $MFR_2$ (230 °C) measured according to ISO 1133 of at least 500.0 g/10min,
(d) the polypropylene (PP1) and the random propylene copolymer (R-PP) fulfill the relation (1),

$$0.4 \text{ x MFR (R-PP)} \leq \text{MFR (PP1)} \leq 500 \text{ x MFR (R-PP)} \quad (1)$$

wherein

MFR (R-PP) is melt flow rate $MFR_2$ (230 °C) [g/10min] measured according to ISO 1133 of the random propylene copolymer (R-PP) without the masterbatch (M), and
MFR (PP1) is melt flow rate $MFR_2$ (230 °C) [g/10min] measured according to ISO 1133 of the polypropylene (PP1).

**13.** Process for producing an extrusion blow molded (EBM) article comprising the steps of

(A1) premixing a masterbatch (M) and a random propylene copolymer (R-PP) in a melt mixing device obtaining thereby a mixture,
(B1) solidifying and pelletizing said mixture,
(C1) melting and extruding said mixture obtaining thereby obtaining a molten mixture,
(D1) extruding said molten mixture into a melt tube (parison),
(E1) blowing said parison into a formed article,
(F1) cooling and subsequently ejecting said formed article,
or
(A2) feeding a masterbatch (M) and a random propylene copolymer (R-PP) into an extruder obtaining thereby a mixture
(B2) extruding said mixture obtaining thereby a molten mixture,
(C2) extruding said molten mixture into a melt tube (parison),
(D2) blowing said parison into a formed article,
(E2) cooling and subsequently ejecting said formed article,

wherein

(a) the masterbatch (M) comprises a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,
(b) the random propylene copolymer (R-PP) has a comonomer content in the range of above 0.5 to 10.0 wt.-%, the comonomers are ethylene and/or at least one $C_4$ to $C_{12}$ $\alpha$-olefin,
(c) the polypropylene (PP1) has a melt flow rate $MFR_2$ (230 °C) measured according to ISO 1133 of at least 500.0 g/10min,
(d) the polypropylene (PP1) and the random propylene copolymer (R-PP) fulfill the relation (1),

$$0.4 \text{ x MFR (R-PP)} \leq \text{MFR (PP1)} \leq 500 \text{ x MFR (R-PP)} \quad (1)$$

wherein

MFR (R-PP) is melt flow rate $MFR_2$ (230 °C) [g/10min] measured according to ISO 1133 of the random propylene copolymer (R-PP) without the masterbatch (M), and
MFR (PP1) is melt flow rate $MFR_2$ (230 °C) [g/10min] measured according to ISO 1133 of the polypropylene (PP1).

**14.** Process for producing an injection stretch blow molded (ISBM) article comprising the steps of

(A1) premixing a masterbatch (M) and a random propylene copolymer (R-PP) in a melt mixing device like an extruder obtaining thereby a mixture,

(B1) solidifying and pelletizing said mixture, (C1) melting and extruding said mixture obtaining thereby obtaining a molten mixture,

(D1) injecting said molten mixture into a perform mold obtaining a preform,

(E1) optionally cooling and re-heating, then stretching said preform,

(F1) blowing said preform into a formed article,

(G1) cooling and subsequently ejecting said formed article,

or

(A2) feeding a masterbatch (M) and a random propylene copolymer (R-PP) into an extruder obtaining thereby a mixture

(B2) extruding said mixture obtaining thereby a molten mixture,

(C2) injecting said molten mixture into a perform mold obtaining a preform,

(E1) optionally cooling and re-heating, then stretching said preform,

(F1) blowing said preform into a formed article,

(F2) cooling and subsequently ejecting said formed article,

wherein

(a) the masterbatch (M) comprises a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,

(b) the random propylene copolymer (R-PP) has a comonomer content in the range of above 0.5 to 10.0 wt.-%, the comonomers are ethylene and/or at least one $C_4$ to $C_{12}$ $\alpha$-olefin,

(c) the polypropylene (PP1) has a melt flow rate $MFR_2$ (230 °C) measured according to ISO 1133 of at least 500.0 g/10min,

(d) the polypropylene (PP1) and the random propylene copolymer (R-PP) fulfill the relation (1),

$$0.4 \text{ x MFR (R-PP)} \leq \text{MFR (PP1)} \leq 500 \text{ x MFR (R-PP)} \quad (1)$$

wherein

MFR (R-PP) is melt flow rate $MFR_2$ (230 °C) [g/10min] measured according to ISO 1133 of the random propylene copolymer (R-PP) without the masterbatch (M), and

MFR (PP1) is melt flow rate $MFR_2$ (230 °C) [g/10min] measured according to ISO 1133 of the polypropylene (PP1).

15. Process according to any one of the claims 12 to 14, wherein the masterbatch (M), the polypropylene (PP1), the $\alpha$-nucleating agent (N), and the random propylene copolymer (R-PP) are further defined according to any one of the preceding claims 1 to 11.

16. Polypropylene composition comprising

(a) at least 80 wt.-%, preferably in the range of 85.0 wt.-% to 95.5 wt.-%, of a random propylene copolymer (R-PP)

(b) at least 0.5 wt.-% of a polypropylene (PP1), and

(c) 0.0005 to 3.0 wt.-% of and an $\alpha$-nucleating agent (N),

wherein

(i) the polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,

(ii) the random propylene copolymer (R-PP) has a comonomer content in the range of above 0.5 to 10.0 wt.-%, the comonomers are ethylene and/or at least one $C_4$ to $C_{12}$ $\alpha$-olefin,

(iii) the polypropylene (PP1) has a melt flow rate $MFR_2$ (230 °C) measured according to ISO 1133 of at least 500.0 g/10min,

(iv) the polypropylene (PP1) and the random propylene copolymer (R-PP) fulfill the relation (1)

$$0.4 \times \text{MFR (R-PP)} \leq \text{MFR (PP1)} \leq 500 \times \text{MFR (R-PP)} \quad (1)$$

wherein

MFR (R-PP) is melt flow rate $\text{MFR}_2$ (230 °C) [g/10min] measured according to ISO 1133 of the random propylene copolymer (R-PP), and
MFR (PP1) is melt flow rate $\text{MFR}_2$ (230 °C) [g/10min] measured according to ISO 1133 of the polypropylene (PP1).

17. Composition according to claim 16, wherein the polypropylene (PP1), the a-nucleating agent (N), and the random propylene copolymer (R-PP) are further defined according to any one of the preceding claims 1 to 11.

18. Injection molded article (IM), extrusion blow molded (EBM), or injection stretch blow molded (ISBM) article comprising a composition according to claim 16 or 17.

19. Masterbatch (M) comprising a polypropylene (PP1) and an $\alpha$-nucleating agent (N), wherein said polypropylene (PP1) is a propylene homopolymer (H-PP1) or a random propylene copolymer (R-PP1), said random propylene copolymer (R-PP1) has a comonomer content in the range of above 0.5 to 10.0 wt.-%, the comonomers are ethylene and/or at least one $C_4$ to $C_{12}$ $\alpha$-olefin,
wherein further

(a) the weight ratio of the $\alpha$-nucleating agent (N) to the polypropylene (PP1) [N/PP1] in the masterbatch (M) is from 1.0/99.0 to 25.0/75.0
and
(b) said polypropylene (PP1) has a melt flow rate $\text{MFR}_2$ (230 °C) measured according to ISO 1133 of at least 500.0 g/10min.

20. Composition according to claim 19, wherein the polypropylene (PP1) and the $\alpha$-nucleating agent (N) are further defined according to any one of the preceding claims 1 to 11.

**Patentansprüche**

1. Verwendung von einem Masterbatch (M) in einem statistischen Propylen-Copolymer (R-PP) zum Verbessern der Transparenz und Steifigkeit,
wobei

(a) das Masterbatch (M) ein Polypropylen (PP1) und ein $\alpha$-Nukleierungs-Mittel (N) umfasst, wobei das Polypropylen (PP1) ein Propylen-Homopolymer (H-PP1) oder ein statistisches Propylen-Copolymer (R-PP1) ist, wobei das statistische Propylen-Copolymer (R-PP1) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(b) das statistische Propylen-Copolymer (R-PP) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(c) das Polypropylen (PP1) eine Schmelze-Fließ-Rate $\text{MFR}_2$ (230°C), gemessen gemäß ISO 1133, von mindestens 500,0 g/10 min aufweist,
(d) das Polypropylen (PP1) und das statistische Propylen-Copolymer (R-PP) der Beziehung (1) genügen

$$0,4 \times \text{MFR (R-PP)} \leq \text{MFR (PP1)} \leq 500 \times \text{MFR (R-PP)} \quad (1)$$

wobei

MFR (R-PP) die Schmelze-Fließ-Rate $\text{MFR}_2$ (230°C) [g/10 min], gemessen gemäß ISO 1133, von dem statistischen Propylen-Copolymer (R-PP) ohne das Masterbatch (M) ist, und
MFR (PP1) die Schmelze-Fließ-Rate $\text{MFR}_2$ (230°C) [g/10 min], gemessen gemäß ISO 1133, von dem Polypropylen (PP1) ist.

2. Verwendung nach Anspruch 1, wobei

(a) das statistische Propylen-Copolymer (R-PP) ohne das Masterbatch (M) eine Schmelze-Fließ-Rate $MFR_2$ (230°C), gemessen gemäß ISO 1133, in dem Bereich von oberhalb 1,8 bis unter 150,0g/10 min aufweist, und/oder
(b) das Polypropylen (PP1) eine Schmelze-Fließ-Rate $MFR_2$ (230°C), gemessen gemäß ISO 1133, unter 20 000 g/10 min aufweist.

3. Verwendung nach Anspruch 1 oder 2, wobei

(a) Zug-Modul [MPa], gemessen gemäß ISO 527, von dem statistischen Propylen-Copolymer (R-PP) mindestens um einen Faktor von 1,12 angestiegen ist, wobei der Faktor aus dem Quotienten für Zug-Modul [MPa] von dem statistischen Propylen-Copolymer (R-PP), das das Masterbatch (M) enthält, und dem Zug-Modul [MPa] von dem statistischen Propylen-Copolymer (R-PP) ohne das Masterbatch (M) [R-PP (mit M) / R-PP (ohne M)] bewertet wird,
und
(b) der Haze-Wert [%], gemessen gemäß ASTM 1003 (1 mm Dicke) von dem statistischen Propylen-Copolymer (R-PP), mindestens um einen Faktor 1,8 gesenkt ist, wobei der Faktor aus dem Quotienten für den Haze-Wert [%] von dem statistischen Propylen-Copolymer (R-PP) ohne das Masterbatch (M) und dem Haze-Wert [%] von dem statistischen Propylen-Copolymer (R-PP), das das Masterbatch (M) [R-PP (ohne M) / R-PP (mit M)] enthält, bewertet wurde.

4. Verwendung nach einem der vorangehenden Ansprüche, wobei das Gewichts-Verhältnis von Masterbatch (M) zu statistischem Propylen-Copolymer (R-PP) [M/R-PP] von 0,5/99,5 bis 15,0/85,0 ist.

5. Verwendung nach einem der vorangehenden Ansprüche, wobei das Gewichts-Verhältnis von dem $\alpha$-Nukleierungs-Mittel (N) zu dem Polypropylen (PP1) [N/PP1] in dem Masterbatch (M) von 1,0/99,0 bis 25,0/75,0 ist.

6. Verwendung nach einem der vorangehenden Ansprüche, wobei das Polypropylen (PP1) ein Propylen-Homopolymer (H-PP1) ist.

7. Verwendung nach einem der vorangehenden Ansprüche, wobei das Polypropylen (PP1) eine in kaltem Xylol lösliche Fraktion (XCS) von bis zu 12,0 Gew.-% aufweist.

8. Verwendung nach einem der vorangehenden Ansprüche, wobei

(a) das Polypropylen (PP1) eine Schmelz-Temperatur Tm, gemessen durch dynamische Differenz-Kalorimetrie (DSC), oberhalb 130°C aufweist,
und/oder
(b) das Masterbatch (M) Kristallisations-Temperatur Tc, gemessen durch dynamische Differenz-Kalorimetrie (DSC), in dem Bereich von 108 bis 135°C aufweist.

9. Verwendung nach einem der vorangehenden Ansprüche, wobei das $\alpha$-Nukleierungs-Mittel (N) ausgewählt ist aus der Gruppe, bestehend aus Sorbit-Derivaten, Nonit-Derivaten, Benzol-trisamiden und Gemischen davon.

10. Verwendung nach einem der vorangehenden Ansprüche, wobei das statistische Propylen-Copolymer (R-PP) der Gleichung (I) genügt

$$R + 4,96 \times C \leq 95,66 \quad (I)$$

wobei

R die Zufälligkeit [%], gemessen durch Fourier-Transformations-Infrarot-Spektroskopie (FTIR), ist, und
C der Comonomer-Gehalt [Gew.-%], gemessen durch Fourier-Transformations-Infrarot-Spektroskopie (FTIR), ist.

**11.** Verwendung nach einem der vorangehenden Ansprüche, wobei das statistische Propylen-Copolymer (R-PP) aufweist

(a) eine Schmelz-Temperatur Tc, gemessen durch dynamische Differenz-Kalorimetrie (DSC), in dem Bereich von 140 bis 164°C,
und/oder
(b) eine in kaltem Xylol lösliche Fraktion (XCS) von nicht mehr als 12,0 Gew.-%.

**12.** Verfahren zur Herstellung eines Spritzgieß-geformten (IM) Gegenstands, umfassend die Schritte von

(A1) Vormischen eines Masterbatches (M) und eines statistischen Propylen-Copolymers (R-PP) in einer Schmelz-Misch-Vorrichtung unter Gewinnen eines Gemisches dabei,
(B1) Verfestigen und Pelletieren des Gemisches,
(C1) Schmelzen und Extrudieren des Gemisches unter Gewinnen eines geschmolzenen Gemisches dabei,
(D1) Einspritzen des geschmolzenen Gemisches in eine Form unter Gewinnen eines Form-Gegenstands, und
(E1) Kühlen des Form-Gegenstands und anschließend Auswerfen des Form-Gegenstands,
oder
(A2) Zuführen eines Masterbatches (M) und eines statistischen Propylen-Copolymers (R-PP) in einen Extruder unter Gewinnen eines Gemisches dabei,
(B2) Extrudieren des Gemisches unter Gewinnen eines geschmolzenen Gemisches dabei,
(C2) Einspritzen des geschmolzenen Gemisches in eine Form unter Gewinnen eines Form-Gegenstands,
(D2) Kühlen des Form-Gegenstands und anschließend Auswerfen des Form-Gegenstands,

wobei

(a) das Masterbatch (M) ein Polypropylen (PP1) und ein $\alpha$-Nukleierungs-Mittel (N) umfasst, wobei das Polypropylen (PP1) ein Propylen-Homopolymer (H-PP1) oder ein statistisches Propylen-Copolymer (R-PP1) ist, wobei das statistische Propylen-Copolymer (R-PP1) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(b) das statistische Propylen-Copolymer (R-PP) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(c) das Polypropylen (PP1) eine Schmelze-Fließ-Rate $MFR_2$ (230°C), gemessen gemäß ISO 1133, von mindestens 500,0 g/10 min aufweist,
(d) das Polypropylen (PP1) und das statistische Propylen-Copolymer (R-PP) der Beziehung (1) genügen,

$$0,4 \text{ x MFR (R-PP)} \leq \text{MFR (PP1)} \leq 500 \text{ x MFR (R-PP)} \quad (1)$$

wobei

MFR (R-PP) die Schmelze-Fließ-Rate $MFR_2$ (230°C) [g/10 min], gemessen gemäß ISO 1133, von dem statistischen Propylen-Copolymer (R-PP) ohne das Masterbatch (M) ist, und
MFR (PP1) die Schmelze-Fließ-Rate $MFR_2$ (230°C) [g/10 min], gemessen gemäß ISO 1133, von dem Polypropylen (PP1) ist.

**13.** Verfahren zur Herstellung eines Extrusions-blas-geformten (EBM) Gegenstands, umfassend die Schritte von

(A1) Vormischen eines Masterbatches (M) und eines statistischen Propylen-Copolymers (R-PP) in einer Schmelz-Misch-Vorrichtung unter Gewinnen eines Gemisches dabei,
(B1) Verfestigen und Pelletieren des Gemisches,
(C1) Schmelzen und Extrudieren des erhaltenen Gemisches unter Gewinnen eines geschmolzenen Gemisches dabei,
(D1) Extrudieren des geschmolzenen Gemisches zu einem Schmelz-Rohr (Parison),
(E1) Blasen des Parisons zu einem Form-Gegenstand,
(F1) Kühlen und anschließend Auswerfen des Form-Gegenstands,
oder
(A2) Zuführen eines Masterbatches (M) und eines statistischen Propylen-Copolymers (R-PP) in einen Extruder unter Gewinnen eines Gemisches dabei,
(B2) Extrudieren des Gemisches unter Gewinnen eines geschmolzenen Gemisches dabei,
(C2) Extrudieren des geschmolzenen Gemisches zu einem Schmelz-Rohr (Parison),
(D2) Blasen des Parisons zu einem Form-Gegenstand,
(E2) Kühlen und anschließend Auswerfen des Form-Gegenstands,

wobei

(a) das Masterbatch (M) ein Polypropylen (PP1) und ein $\alpha$-Nukleierungs-Mittel (N) umfasst, wobei das Polypropylen (PP1) ein Propylen-Homopolymer (H-PP1) oder ein statistisches Propylen-Copolymer (R-PP1) ist, wobei das statistische Propylen-Copolymer (R-PP1) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(b) das statistische Propylen-Copolymer (R-PP) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(c) das Polypropylen (PP1) eine Schmelze-Fließ-Rate $MFR_2$ (230°C), gemessen gemäß ISO 1133, von mindestens 500,0 g/10 min aufweist,
(d) das Polypropylen (PP1) und das statistische Propylen-Copolymer (R-PP) der Beziehung (1) genügen,

$$0,4 \text{ x MFR (R-PP)} \leq \text{MFR (PP1)} \leq 500 \text{ x MFR (R-PP)} \quad (1)$$

wobei

MFR (R-PP) die Schmelze-Fließ-Rate $MFR_2$ (230°C) [g/10 min], gemessen gemäß ISO 1133, von dem statistischen Propylen-Copolymer (R-PP) ohne das Masterbatch (M) ist, und
MFR (PP1) die Schmelze-Fließ-Rate $MFR_2$ (230°C) [g/10 min], gemessen gemäß ISO 1133, von dem Polypropylen (PP1) ist.

14. Verfahren zur Herstellung eines spritz-streck-blas-geformten (ISBM) Gegenstands, umfassend die Schritte von

(A1) Vormischen eines Masterbatches (M) und eines statistischen Propylen-Copolymers (R-PP) in einer Schmelz-Misch-Vorrichtung, wie ein Extruder, unter Gewinnen eines Gemisches dabei,
(B1) Verfestigen und Pelletieren des Gemisches,
(C1) Schmelzen und Extrudieren des erhaltenen Gemisches unter Gewinnen eines geschmolzenen Gemisches dabei, (D1
) Einspritzen des geschmolzenen Gemisches in eine Ausführungs-Form unter Gewinnen einer Vorform,
(E1) gegebenenfalls Kühlen und Wieder-Erhitzen, dann Verstrecken der Vorform,
(F1) Blasen der Vorform zu einem Form-Gegenstand,
(G1) Kühlen und anschließend Auswerfen des Form-Gegenstands,
oder
(A2) Zuführen eines Masterbatches (M) und eines statistischen Propylen-Copolymers (R-PP) in einen Extruder unter Gewinnen eines Gemisches dabei,
(B2) Extrudieren des Gemisches unter Gewinnen eines geschmolzenen Gemisches dabei,
(C2) Einspritzen des geschmolzenen Gemisches in eine Ausübungs-Form unter Gewinnen einer Vorform,
(E1) gegebenenfalls Kühlen und Wieder-Erhitzen, dann Verstrecken der Vorform,
(F1) Blasen der Vorform zu einem Form-Gegenstand,
(F2) Kühlen und anschließend Auswerfen des Form-Gegenstands,

wobei

(a) das Masterbatch (M) ein Polypropylen (PP1) und ein $\alpha$-Nukleierungs-Mittel (N) umfasst, wobei das Polypropylen (PP1) ein Propylen-Homopolymer (H-PP1) oder ein statistisches Propylen-Copolymer (R-PP1) ist, wobei das statistische Propylen-Copolymer (R-PP1) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(b) das statistische Propylen-Copolymer (R-PP) einen Comonomer-Gehalt in dem Bereich von oberhalb 0,5 bis 10,0 Gew.-% aufweist, wobei die Comonomere Ethylen und/oder mindestens ein $C_4$ bis $C_{12}$ $\alpha$-Olefin sind,
(c) das Polypropylen (PP1) eine Schmelze-Fließ-Rate $MFR_2$ (230°C), gemessen gemäß ISO 1133, von mindestens 500,0 g/10 min aufweist,
(d) das Polypropylen (PP1) und das statistische Propylen-Copolymer (R-PP) der Beziehung (1) genügen,

$$0,4 \text{ x MFR (R-PP)} \leq \text{MFR (PP1)} \leq 500 \text{ x MFR (R-PP) (1)}$$

wobei

MFR (R-PP) die Schmelze-Fließ-Rate $MFR_2$ (230°C) [g/10 min], gemessen gemäß ISO 1133, von dem statistischen Propylen-Copolymer (R-PP) ohne das Masterbatch (M) ist, und
MFR (PP1) die Schmelze-Fließ-Rate $MFR_2$ (230°C) [g/10 min], gemessen gemäß ISO 1133, von dem Polypropylen (PP1) ist.

15. Verfahren nach einem der Ansprüche 12 bis 14, wobei das Masterbatch (M), das Polypropylen (PP1), das $\alpha$-Nukleierungs-Mittel (N) und das statistische Propylen-Copolymer (R-PP) weiterhin nach einem der Ansprüche 1 bis 11 definiert sind.

16. Polypropylen-Zusammensetzung, umfassend

(a) mindestens 80 Gew.-%, vorzugsweise in dem Bereich von 85,0 Gew.-% bis 95,5 Gew.-%, von einem statistischen Propylen-Copolymer (R-PP)
(b) mindestens 0,5 Gew.-% von einem Polypropylen (PP1), und
(c) 0,0005 bis 3,0 Gew.-% von einem $\alpha$-Nukleierungs-Mittel (N),

wobei

(i) das Polypropylen (PP1) ein Propylen-Homopolymer (H-PP1) oder ein statistisches Propylen-Copolymer (R-PP1) ist, wobei das statistische Propylen-Copolymer (R-PP1) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(ii) das statistische Propylen-Copolymer (R-PP) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
(iii) das Polypropylen (PP1) eine Schmelze-Fließ-Rate $MFR_2$ (230°C), gemessen gemäß ISO 1133, von mindestens 500,0 g/10 min aufweist,
(iv) das Polypropylen (PP1) und das statistische Propylen-Copolymer (R-PP) der Beziehung (1) genügen

$$0,4 \text{ x MFR (R-PP)} \leq \text{MFR (PP1)} \leq 500 \text{ x MFR (R-PP) (1)}$$

wobei

MFR (R-PP) die Schmelze-Fließ-Rate $MFR_2$ (230°C) [g/10 min], gemessen gemäß ISO 1133, von dem statistischen Propylen-Copolymer (R-PP) ist, und
MFR (PP1) die Schmelze-Fließ-Rate $MFR_2$ (230°C) [g/10 min], gemessen gemäß ISO 1133, von dem Polypropylen (PP1) ist.

17. Zusammensetzung nach Anspruch 16, wobei das Polypropylen (PP1), das $\alpha$-Nukleierungs-Mittel (N) und das statistische Propylen-Copolymer (R-PP) weiterhin nach einem der vorangehenden Ansprüche 1 bis 11 definiert sind.

18. Spritzgieß-geformter Gegenstand (IM), Extrusions-blasgeformter (EBM) oder spritz-streck-blas-geformter (ISBM) Gegenstand, umfassend eine Zusammensetzung nach Anspruch 16 oder 17.

19. Masterbatch (M), umfassend ein Polypropylen (PP1) und ein $\alpha$-Nukleierungs-Mittel (N), wobei das Polypropylen (PP1) ein Propylen-Homopolymer (H-PP1) oder ein statistisches Propylen-Copolymer (R-PP1) ist, wobei das statistische Propylen-Copolymer (R-PP1) einen Comonomer-Gehalt in dem Bereich von oberhalb 0,5 bis 10,0 Gew.-% aufweist, die Comonomere Ethylen und/oder mindestens ein $C_4$ bis $C_{12}$ $\alpha$-Olefin sind,
wobei weiterhin

(a) das Gewichts-Verhältnis von dem α-Nukleierungs-Mittel (N) zu dem Polypropylen (PP1) [N/PP1] in dem Masterbatch (M) von 1,0 / 99,0 bis 25,0 / 75,0 ist
und
(b) das Polypropylen (PP1) eine Schmelze-Fließ-Rate MFR$_2$ (230°C), gemessen gemäß ISO 1133, von mindestens 500,0 g/10 min aufweist.

**20.** Zusammensetzung nach Anspruch 19, wobei das Polypropylen (PP1) und das α-Nukleierungs-Mittel (N) weiterhin nach einem der vorangehenden Ansprüche 1 bis 11 definiert sind.

**Revendications**

**1.** Utilisation d'un mélange maître (M) dans un copolymère de propylène statistique (R-PP) pour améliorer la transparence et la rigidité, dans laquelle

(a) le mélange maître (M) comprend un polypropylène (PP1) et un agent d'α-nucléation (N), ledit polypropylène (PP1) étant un homopolymère de propylène (H-PP1) ou un copolymère de propylène statistique (R-PP1), ledit copolymère de propylène statistique (R-PP1) présentant une teneur en comonomères située dans la plage allant de plus de 0,5 à 10,0 % en poids, et les comonomères étant l'éthylène et/ou au moins une α-oléfine en C$_4$ à C$_{12}$,
(b) le copolymère de propylène statistique (R-PP) présente une teneur en comonomères située dans la plage allant de plus de 0,5 à 10,0 % en poids, les comonomères étant l'éthylène et/ou au moins une α-oléfine en C$_4$ à C$_{12}$,
(c) le polypropylène (PP1) présente un indice de fluage MFR$_2$ (230°C), mesuré conformément à la norme ISO 1133, d'au moins 500,0 g/10 min,
(d) le polypropylène (PP1) et le copolymère de propylène statistique (R-PP) satisfont à la relation (1) :

$$0,4 \text{ x MFR (R-PP)} \leq \text{MFR (PP1)} \leq 500 \text{ x MFR (R-PP)} \tag{1}$$

dans laquelle

MFR (R-PP) est l'indice de fluage MFR$_2$ (230°C) [g/10 min], mesuré conformément à la norme ISO 1133, du copolymère de propylène statistique (R-PP) sans le mélange maître (M), et
MFR (PP1) est l'indice de fluage MFR$_2$ (230°C) [g/10 min], mesuré conformément à la norme ISO 1133, du polypropylène (PP1).

**2.** Utilisation selon la revendication 1, dans laquelle

(a) le copolymère de propylène statistique (R-PP) sans le mélange maître (M) présente un indice de fluage MFR$_2$ (230°C), mesuré conformément à la norme ISO 1133, situé dans la plage allant de plus de 1,8 à moins de 150,0 g/10 min,
et/ou
(b) le polypropylène (PP1) présente un indice de fluage MFR$_2$ (230°C), mesuré conformément à la norme ISO 1133, inférieur à 20 000,0 g/10 min.

**3.** Utilisation selon la revendication 1 ou 2, dans laquelle

(a) le module d'élasticité en traction [MPa], mesuré conformément à la norme ISO 527, du copolymère de propylène statistique (R-PP) est augmenté d'un facteur d'au moins 1,12, le facteur étant évalué à partir du quotient pour le module d'élasticité en traction [MPa] du copolymère de propylène statistique (R-PP) contenant le mélange maître (M) et le module d'élasticité en traction [MPa] du copolymère de propylène statistique (R-PP) dépourvu du mélange maître (M) [R-PP (avec M) / R-PP (sans M)],
et
(b) le voile [%], mesuré conformément à la norme ASTM 1003 (épaisseur 1 mm) du copolymère de propylène statistique (R-PP) est diminué d'un facteur d'au moins 1,8, le facteur étant évalué à partir du quotient pour le voile [%] du copolymère de propylène statistique (R-PP) dépourvu du mélange maître (M) et le voile [%] du copolymère de propylène statistique (R-PP) contenant le mélange maître (M) [R-PP (sans M) / R-PP (avec M)].

4. Utilisation selon l'une quelconque des revendications précédentes, dans laquelle le rapport en poids du mélange maître (M) sur le copolymère de propylène statistique (R-PP) [M/R-PP] est de 0,5/99,5 à 15,0/85,0.

5. Utilisation selon l'une quelconque des revendications précédentes, dans laquelle le rapport en poids de l'agent d'$\alpha$-nucléation (N) sur le polypropylène (PP1) [N/PP1] dans le mélange maître (M) est de 1,0/99,0 à 25,0/75,0.

6. Utilisation selon l'une quelconque des revendications précédentes, dans laquelle le polypropylène (PP1) est un homopolymère de propylène (H-PP1).

7. Utilisation selon l'une quelconque des revendications précédentes, dans laquelle le polypropylène (PP1) comporte une fraction soluble dans le xylène froid (XCS) allant jusqu'à 12,0 % en poids.

8. Utilisation selon l'une quelconque des revendications précédentes, dans laquelle

(a) le polypropylène (PP1) présente un point de fusion Tm, mesuré par calorimétrie à balayage différentiel (DSC), supérieur à 130°C,
et/ou
(b) le mélange maître (M) présente un point de cristallisation Tc, mesuré par calorimétrie à balayage différentiel (DSC), situé dans la plage allant de 108 à 135°C.

9. Utilisation selon l'une quelconque des revendications précédentes, dans laquelle l'agent d'$\alpha$-nucléation (N) est choisi dans l'ensemble constitué par les dérivés de sorbitol, les dérivés de nonitol, les benzènetris-amides et leurs mélanges.

10. Utilisation selon l'une quelconque des revendications précédentes, dans laquelle le copolymère de propylène statistique (R-PP) satisfait à l'équation (I)

$$R + 4,96 \times C \leq 95,66 \qquad\qquad (I)$$

dans laquelle

R est le caractère statistique [%], mesuré par spectroscopie infrarouge à transformée de Fourier (FTIR), et C est la teneur en comonomères [% en poids], mesurée par spectroscopie infrarouge à transformée de Fourier (FTIR).

11. Utilisation selon l'une quelconque des revendications précédentes, dans laquelle le copolymère de propylène statistique (R-PP)

(a) présente un point de fusion Tc, mesuré par calorimétrie à balayage différentiel (DSC), situé dans la plage allant de 140 à 164°C,
et/ou
(b) comporte une fraction soluble dans le xylène froid (XCS) ne dépassant pas 12,0 % en poids.

12. Procédé pour produire un article moulé par injection (IM), comprenant les étapes consistant à

(A1) prémélanger un mélange maître (M) et un copolymère de propylène statistique (R-PP) dans un dispositif de mélange à l'état fondu, ce qui donne ainsi un mélange,
(B1) solidifier et pastiller ledit mélange,
(C1) fondre et extruder ledit mélange, ce qui donne ainsi un mélange fondu,
(D1) injecter ledit mélange fondu dans un moule, ce qui donne un article façonné, et
(E1) refroidir ledit article façonné et ensuite éjecter ledit article façonné,
ou
(A2) introduire un mélange maître (M) et un copolymère de propylène statistique (R-PP) dans une extrudeuse, ce qui donne ainsi un mélange,

(B2) extruder ledit mélange, ce qui donne ainsi un mélange fondu,

(C2) injecter ledit mélange fondu dans un moule, de qui donne un article façonné,

(D2) refroidir ledit article façonné et ensuite éjecter ledit article façonné,

dans lequel

(a) le mélange maître (M) comprend un polypropylène (PP1) et un agent d'$\alpha$-nucléation (N), ledit polypropylène (PP1) étant un homopolymère de propylène (H-PP1) ou un copolymère de propylène statistique (R-PP1), ledit copolymère de propylène statistique (R-PP1) présentant une teneur en comonomères située dans la plage allant de plus de 0,5 à 10,0 % en poids, et les comonomères étant l'éthylène et/ou au moins une $\alpha$-oléfine en $C_4$ à $C_{12}$,

(b) le copolymère de propylène statistique (R-PP) présente une teneur en comonomères située dans la plage allant de plus de 0,5 à 10,0 % en poids, les comonomères étant l'éthylène et/ou au moins une $\alpha$-oléfine en $C_4$ à $C_{12}$,

(c) le polypropylène (PP1) présente un indice de fluage MFR$_2$ (230°C), mesuré conformément à la norme ISO 1133, d'au moins 500,0 g/10 min,

(d) le polypropylène (PP1) et le copolymère de propylène statistique (R-PP) satisfont à la relation (1) :

$$0,4 \text{ x MFR (R-PP)} \leq \text{MFR (PP1)} \leq 500 \text{ x MFR (R-PP)} \qquad (1)$$

dans laquelle

MFR (R-PP) est l'indice de fluage MFR$_2$ (230°C) [g/10 min], mesuré conformément à la norme ISO 1133, du copolymère de propylène statistique (R-PP) dépourvu du mélange maître (M), et

MFR (PP1) est l'indice de fluage MFR$_2$ (230°C) [g/10 min], mesuré conformément à la norme ISO 1133, du polypropylène (PP1).

**13.** Procédé pour produire un article moulé par extrusion-soufflage (EBM), comprenant les étapes consistant à

(A1) prémélanger un mélange maître (M) et un copolymère de propylène statistique (R-PP) dans un dispositif de mélange à l'état fondu, ce qui donne ainsi un mélange,

(B1) solidifier et pastiller ledit mélange,

(C1) fondre et extruder ledit mélange, ce qui donne ainsi un mélange fondu,

(D1) extruder ledit mélange fondu en un tube fondu (paraison),

(E1) souffler ladite paraison en un article façonné,

(F1) refroidir et ensuite éjecter ledit article façonné, ou

(A2) introduire un mélange maître (M) et un copolymère de propylène statistique (R-PP) dans une extrudeuse, ce qui donne ainsi un mélange,

(B2) extruder ledit mélange, ce qui donne ainsi un mélange fondu,

(C2) extruder ledit mélange fondu en un tube fondu (paraison),

(D2) refroidir ladite paraison en un article façonné,

(E2) refroidir et ensuite éjecter ledit article façonné,

dans lequel

(a) le mélange maître (M) comprend un polypropylène (PP1) et un agent d'$\alpha$-nucléation (N), ledit polypropylène (PP1) étant un homopolymère de propylène (H-PP1) ou un copolymère de propylène statistique (R-PP1), ledit copolymère de propylène statistique (R-PP1) présentant une teneur en comonomères située dans la plage allant de plus de 0,5 à 10,0 % en poids, et les comonomères étant l'éthylène et/ou au moins une $\alpha$-oléfine en $C_4$ à $C_{12}$,

(b) le copolymère de propylène statistique (R-PP) présente une teneur en comonomères située dans la plage allant de plus de 0,5 à 10,0 % en poids, les comonomères étant l'éthylène et/ou au moins une $\alpha$-oléfine en $C_4$ à $C_{12}$,

(c) le polypropylène (PP1) présente un indice de fluage MFR$_2$ (230°C), mesuré conformément à la norme ISO 1133, d'au moins 500,0 g/10 min,

(d) le polypropylène (PP1) et le copolymère de propylène statistique (R-PP) satisfont à la relation (1) :

$$0,4 \text{ x MFR (R-PP)} \leq \text{MFR (PP1)} \leq 500 \text{ x MFR (R-PP)} \qquad (1)$$

dans laquelle

MFR (R-PP) est l'indice de fluage $MFR_2$ (230°C) [g/10 min], mesuré conformément à la norme ISO 1133, du copolymère de propylène statistique (R-PP) dépourvu du mélange maître (M), et
MFR (PP1) est l'indice de fluage $MFR_2$ (230°C) [g/10 min], mesuré conformément à la norme ISO 1133, du polypropylène (PP1).

**14.** Procédé pour produire un article moulé par injection-étirage-soufflage (ISBM), comprenant les étapes consistant à

(A1) prémélanger un mélange maître (M) et un copolymère de propylène statistique (R-PP) dans un dispositif de mélange à l'état fondu tel qu'une extrudeuse, ce qui donne ainsi un mélange,
(B1) solidifier et pastiller ledit mélange,
(C1) fondre et extruder ledit mélange, ce qui donne ainsi un mélange fondu,
(D1) injecter ledit mélange fondu dans un moule d'ébauche, ce qui donne une ébauche,
(E1) éventuellement refroidir et chauffer de nouveau, puis étirer, ladite ébauche,
(F1) souffler ladite ébauche en un article façonné,
(G1) refroidir et ensuite éjecter ledit article façonné, ou
(A2) introduire un mélange maître (M) et un copolymère de propylène statistique (R-PP) dans une extrudeuse, ce qui donne ainsi un mélange,
(B2) extruder ledit mélange, ce qui donne ainsi un mélange fondu,
(C2) injecter ledit mélange fondu dans un moule d'ébauche, ce qui donne une ébauche,
(E1) éventuellement refroidir et chauffer de nouveau, puis étirer, ladite ébauche,
(F1) souffler ladite ébauche en un article façonné,
(F2) refroidir et ensuite éjecter ledit article façonné,

dans lequel

(a) le mélange maître (M) comprend un polypropylène (PP1) et un agent d'$\alpha$-nucléation (N), ledit polypropylène (PP1) étant un homopolymère de propylène (H-PP1) ou un copolymère de propylène statistique (R-PP1), ledit copolymère de propylène statistique (R-PP1) présentant une teneur en comonomères située dans la plage allant de plus de 0,5 à 10,0 % en poids, et les comonomères étant l'éthylène et/ou au moins une $\alpha$-oléfine en $C_4$ à $C_{12}$,
(b) le copolymère de propylène statistique (R-PP) présente une teneur en comonomères située dans la plage allant de plus de 0,5 à 10,0 % en poids, les comonomères étant l'éthylène et/ou au moins une $\alpha$-oléfine en $C_4$ à $C_{12}$,
(c) le polypropylène (PP1) présente un indice de fluage $MFR_2$ (230°C), mesuré conformément à la norme ISO 1133, d'au moins 500,0 g/10 min,
(d) le polypropylène (PP1) et le copolymère de propylène statistique (R-PP) satisfont à la relation (1) :

$$0,4 \text{ x MFR (R-PP)} \leq \text{MFR (PP1)} \leq 500 \text{ x MFR (R-PP)} \qquad (1)$$

dans laquelle

MFR (R-PP) est l'indice de fluage $MFR_2$ (230°C) [g/10 min], mesuré conformément à la norme ISO 1133, du copolymère de propylène statistique (R-PP) dépourvu du mélange maître (M), et
MFR (PP1) est l'indice de fluage $MFR_2$ (230°C) [g/10 min], mesuré conformément à la norme ISO 1133, du polypropylène (PP1).

**15.** Procédé selon l'une quelconque des revendications 12 à 14, dans lequel le mélange maître (M), le polypropylène (PP1), l'agent d'$\alpha$-nucléation (N) et le copolymère de propylène statistique (R-PP) sont davantage définis conformément à l'une quelconque des revendications 1 à 11.

**16.** Composition de polypropylène comprenant

(a) au moins 80 % en poids, de préférence de 85,0 % en poids à 95,5 % en poids, d'un copolymère de propylène statistique (R-PP),
(b) au moins 0,05 % en poids d'un polypropylène (PP1), et
(c) de 0,0005 à 3,0 % en poids d'un agent d'$\alpha$-nucléation (N),

dans laquelle

(i) le polypropylène (PP1) est un homopolymère de propylène (H-PP1) ou un copolymère de propylène statistique (R-PP1), ledit copolymère de propylène statistique (R-PP1) présentant une teneur en comonomères située dans la plage allant de plus de 0,5 à 10,0 % en poids, et les comonomères étant l'éthylène et/ou au moins une $\alpha$-oléfine en $C_4$ à $C_{12}$,
(ii) le copolymère de propylène statistique (R-PP) présente une teneur en comonomères située dans la plage allant de plus de 0,5 à 10,0 % en poids, les comonomères étant l'éthylène et/ou au moins une $\alpha$-oléfine en $C_4$ à $C_{12}$,
(iii) le polypropylène (PP1) présente un indice de fluage MFR$_2$ (230°C), mesuré conformément à la norme ISO 1133, d'au moins 500,0 g/10 min,
(iv) le polypropylène (PP1) et le copolymère de propylène statistique (R-PP) satisfont à la relation (1) :

$$0,4 \text{ x MFR } (R-PP) \leq \text{MFR } (PP1) \leq 500 \text{ x MFR } (R-PP) \qquad (1)$$

dans laquelle

MFR (R-PP) est l'indice de fluage MFR$_2$ (230°C) [g/10 min], mesuré conformément à la norme ISO 1133, du copolymère de propylène statistique (R-PP), et
MFR (PP1) est l'indice de fluage MFR$_2$ (230°C) [g/10 min], mesuré conformément à la norme ISO 1133, du polypropylène (PP1).

17. Composition selon la revendication 16, dans laquelle le polypropylène (PP1), l'agent d'$\alpha$-nucléation (N) et le copolymère de propylène statistique (R-PP) sont davantage définis conformément à l'une quelconque des revendications 1 à 11.

18. Article moulé par injection (IM), article moulé par extrusion-soufflage (EBM) ou article moulé par injection-étirage-soufflage (ISBM), comprenant une composition selon la revendication 16 ou 17.

19. Mélange maître (M) comprenant un polypropylène (PP1) et un agent d'$\alpha$-nucléation (N), ledit polypropylène (PP1) étant un homopolymère de propylène (H-PP1) ou un copolymère de propylène statistique (R-PP1), ledit copolymère de propylène statistique (R-PP1) présentant une teneur en comonomères située dans la plage allant de plus de 0,5 à 10,0 % en poids, et les comonomères étant l'éthylène et/ou au moins une $\alpha$-oléfine en $C_4$ à $C_{12}$, dans lequel en outre

(a) le rapport en poids de l'agent d'$\alpha$-nucléation (N) sur le polypropylène (PP1) [N/PP1] dans le mélange maître (M) est de 1,0/99,0 à 25,0/75,0,
et
(b) ledit polypropylène (PP1) présente un indice de fluage MFR$_2$ (230°C), mesuré conformément à la norme ISO 1133, d'au moins 500,0 g/10 min.

20. Composition selon la revendication 19, dans laquelle le polypropylène (PP1) et l'agent d'$\alpha$-nucléation (N) sont davantage définis conformément à l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1580207 A1
- WO 2003002639 A1
- US 5234879 A
- WO 9219653 A
- WO 9219658 A
- WO 9933843 A
- EP 0887379 A1
- WO 9212182 A
- EP 1741725 A1

### Non-patent literature cited in the description

- **SHEPARD et al.** *J.Polym. Sci.B: Polym.Phys.,* 1997, vol. 35, 2617-2628
- **LIPP et al.** *Langmuir,* 2006, vol. 22, 6398-640
- Glossary of basic terms in polymer science. *IUPAC recommendations,* 1996
- **KRISTIANSEN et al.** *Macromolecules,* 2005, vol. 38, 10461-10465
- **BALZANO et al.** *Macromolecules,* 2008, vol. 41, 5350-5355
- **HANSER.** *Polypropylene Handbook,* 2005, ISBN 1-56990-385-9
- **HANSER.** *Injection Molding,* 2008, ISBN 978-1-56990-419-0
- **HANSER.** *Saechtling Kunststoff Taschenbuch,* 2007, ISBN 978-3-446-40352-9
- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- *Thermochimica Acta,* 1990, vol. 66, 53-68
- IR-Spektroskopie fur Anwender. WILEY-VCH, 1997
- Validierung in der Analytik. WILEY-VCH, 1997